Europäisches Patentamt

**European Patent Office**

Office européen des brevets

(19)

(11) Publication number: **0 255 545**
A1

(12)

# EUROPEAN PATENT APPLICATION

published in accordance with Art. 158(3) EPC

(21) Application number: **87900877.9**

(51) Int. Cl.⁴: **G 06 F 15/72**

(22) Date of filing: **19.01.87**

Data of the international application taken as a basis:

(86) International application number: **PCT/JP 87/00029**

(87) International publication number: **WO 87/04546 (30.07.87 87/17)**

(30) Priority: **20.01.86 JP 9700/86**

(71) Applicant: **FANUC LTD, 3580, Shibokusa Aza-Komanba Oshino-mura, Minamitsuru-gun Yamanashi 401-05 (JP)**

(43) Date of publication of application: **10.02.88 Bulletin 88/6**

(72) Inventor: **YONEKURA, Mikio, 1103, Keio-Takao-Mansion 1231-36, Hatsuzawa-cho, Hachioji-shi Tokyo 193 (JP)**

(74) Representative: **Billington, Lawrence Emlyn et al, HASELTINE LAKE & CO Hazlitt House 28 Southampton Buildings Chancery Lane, London WC2A 1AT (GB)**

(84) Designated Contracting States: **DE FR GB**

(54) **FIGURE PICK-UP SYSTEM.**

(57) Depth values are compared by generating straight lines that fill the plane of a figure included in a view volume that corresponds to a preset window. In this case, a straight line is generated for every N straight lines that fill the plane, and a picture element on the straight line is generated for every M picture elements that fill the straight line. In the system of the invention, the number of straight lines generated for comparing the depth values is selected to be 1/N, and the number of picture elements on the straight line is selected to be 1/M. Therefore, the time is reduced for generating the straight lines and for comparing the depth values, and the figure is picked up at an increased speed.

CALCULATE
$$k_1 = \frac{y_1 - y_2}{x_1 - x_2}$$
$$k_2 = \frac{y_1 - y_3}{x_1 - x_3}$$
(S1)

$\Delta y = 1, h = 0, x = x_1, y = y_1$

OUTPUT
$(x - k_1 h, y - h)$,
$(x - k_2 h, y - h)$ (S2)

$h \leftarrow h + \Delta y$ (S3)

no $h \geqq y_1 - y_2$ (S4)

yes

END

$\Delta x = 1$
$x = x_1$
$y = y_1$

OUTPUT $(x, y)$ (S6)

$x \leftarrow x - \Delta x$

no $x \geqq x_2$ (S7)

yes

END

EP 0 255 545 A1

S P E C I F I C A T I O N

GRAPHIC FORM EXTRACTING SYSTEM

TECHNICAL FIELD

The present invention relates to a system for extracting a desired one of graphic forms being displayed on a display screen and, more particularly, to a graphic form extracting system which permits quick extraction of a specified graphic form on the screen in a three-dimensional graphic processor.

BACKGROUND ART

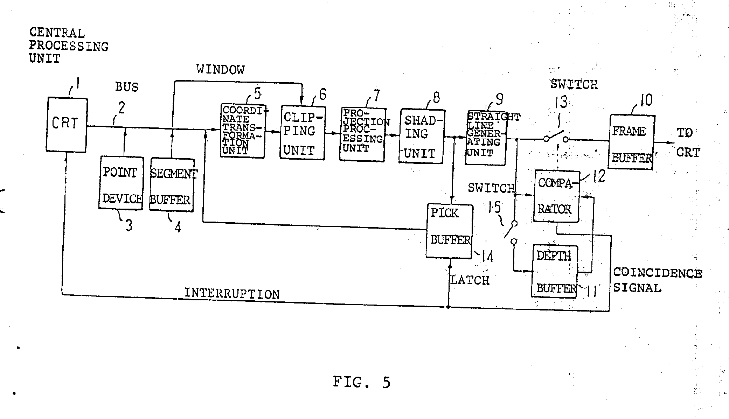

Fig. 5 shows a three-dimensional graphic processor. Reference numeral 1 indicates a central processing unit (CPU), 2 a bus for interconnecting the CPU 1 and peripheral circuits, 3 a pointing device for setting a specified point on the display screen, such as a cursor, joystick, or light pen, 4 a segment buffer for storing three-dimensional image data, 5 a coordinate transformation unit for coordinate-transforming the image data in the segment buffer 4 to represent a graphic form as viewed from a given visual point, 6 a clipping unit for limiting (clipping) the graphic data to that of a graphic form or forms contained in a quadrangular pyramid (a view volume) which has a predetermined visual angle about the visual point, 7 a projection processing unit for transforming the graphic data so that the graphic forms in the view volume may be projected in such shapes as are projected onto a defined plane corresponding to the screen of a display device, 8 a unit for filling each graphic form on the display screen with straight lines, to display it as a plane, 9 a straight line generating unit for generating straight lines for filling the plane of the graphic form, 10 a frame buffer for holding one frame of the thus processed graphic data, 11 a depth buffer for storing data of the graphic form in the depthwise direction (the Z-axis direction) thereof, 12 a comparator for comparing the depth value of each straight line created by the straight line generating unit 9 and a depth value preset in the depth buffer 11, 13 a switch for inhibiting a write of straight line data into the frame buffer, 14 a pick buffer for storing identification data for each graphic form, and 15 a switch for inhibiting the rewriting of the depth buffer 11.

In Fig. 5, the CPU 1 reads out, via the bus 2, three-dimensional image data stored in the segment buffer 4 and supplies it to the coordinate transformation unit 5. The coordinate transformation unit 5 sets a quadrangular pyramid (a view volume) which has a predetermined visual angle about a preset visual point, and transforms the coordinate system, regarding the direction of the height of the quadrangular pyramid as the Z-axis direction.

The clipping unit 6 decides whether graphic forms lie in the view volume, and performs a clipping process which extracts data of a graphic form lying inside the view volume, removing or deleting a graphic form which lies outside the boundary of the view volume and that portion of a graphic form lying across the boundary of the view volume which sticks out therefrom.

The projection processing unit 7 performs a process of data transformation for projection, by which graphic data is transformed so that the graphic form lying in the view volume may assume a shape which is projected on a plane (a defined plane) perpendicular to the Z-axis, defined corresponding to the screen of a display device (a CRT) not shown.

The unit 8 performs a process of filling the thus processed graphic form with a number of parallel straight lines to display it as a plane. The unit 8 determines starting and terminating points of such straight lines and instructs the straight line generating unit 9 to generate the straight lines.

The straight line generating unit 9 responds to the instruction to generate the straight lines as data which is composed of continuous rows of dots forming the respective straight lines.

The depth buffer 11 has prestored therein, as a depth value, the Z coordinate value of that plane in respective graphic data which is the nearest to the visual point (i.e. a plane having the smallest Z coordinate value). The comparator 12 compares the depth value (the Z coordinate value) of the straight line generated by the straight line generating unit 9 and the depth value stored in the depth buffer 11. When coincidence is detected between them, the generated straight line is written into the frame buffer 10. The data thus stored in the frame buffer 10 is read out therefrom as the scanning of the unshown display device (a CRT) proceeds, and is displayed on its screen.

In the case of three-dimensional graphic data in which a plurality of graphic forms overlap as viewed from the visual point, the straight line created by the straight line generating unit 9, which has a Z coordinate value greater than the value stored in the depth buffer 11, belongs to the plane of a graphic form which is hidden behind a graphic form lying in the foreground as viewed from the visual point; accordingly, this data is discarded. By writing into the frame buffer 10 only those data whose depth values coincide with that of the depth buffer, concealed plane processing is carried out which prevents that the graphic form concealed from the visual point by the graphic form lying in the foreground is displayed overlapping with the latter on the display screen.

When performing some manipulation (shift, enlargement, or similar manipulation) of a specified graphic form in the device shown in Fig. 5, an operator designates one point on the display screen by means of the pointing device 3. In response to this, the CPU 1 sets up a window of a certain size about the specified point and sets in the clipping unit 6 a view volume corresponding to the window. At the same time, the CPU 1 turns OFF the switches 13 and 15, inhibiting writes into the frame buffer 10 and the depth buffer 11.

Next, as is the case with ordinary display processing, the CPU reads out the graphic data from the segment buffer 4 and into the coordinate transformation unit 5, after which the coordinate transformation, clipping, data transformation for projection, graphic form filling, and the generation of straight lines are carried out one after another. In this case, identification data (ID No.) is appended to each graphic data. The data identification number passes through each processing section together with the graphic form, but its content will not change during the individual processing of the graphic data.

By the clipping processing in the clipping unit 6 data of graphic forms lying outside the view volume are removed together with their identification numbers. The output from the unit 8 is separated into graphic data and its identification number, the former being input into the straight line generating unit 9 and the latter into the pick buffer 14.

The straight line generating unit 9 generates straight lines corresponding to the plane of the graphic form corresponding to the input data. The straight lines thus created are provided to the comparator 12, wherein the depth value (the Z coordinate value) of each straight line is compared with the depth value stored in the depth buffer 11. The depth buffer 11 has preset therein, as the depth value, the Z coordinate value of a graphic form which is closer to the visual point than any other graphic forms. When it is decided, as a result of the comparison by the comparator 12, that the depth value of the straight line is greater than the depth value of the depth buffer 11, the graphic form is regarded as being hidden behind the graphic form lying in the foreground, and accordingly, the corresponding identification number stored in the pick buffer 14 is cancelled.

On the other hand, when the depth value of the generated straight line coincides with the depth value stored in the depth buffer 11, the CPU 1 is interrupted and at the same time the current value of the pick buffer 14 is latched.

The CPU 1 responds to the occurrence of the interruption to read out the identification number stored in the pick buffer 14 and search through the segment buffer 4 for the graphic data corresponding to the identification number, thereby extracting the graphic form.

In this way, only a graphic form lying closer to the visual point than any others is extracted. When the graphic form is thus extracted, the switch 14 is closed, through which the corresponding graphic data is written into the frame buffer 10, from which it is provided to the unshown display (CRT) for displaying thereon the extracted graphic form.

The extraction of a graphic form is carried out by the operator for manipulating, for example, shifting or enlarging it on the display screen. Accordingly, in order that the extraction of a certain graphic form in a specified area may be immediately or smoothly followed by the subsequent graphic manipulation, it is required that the extraction be completed in the shortest possible time.

With the graphic form extracting system shown in Fig. 5, however, the graphic extraction involves substantially the same operation as that required for ordinary graphic display processing, and hence takes some amount of time. Therefore, this conventional system has the shortcoming that the graphic extraction cannot be accomplished at a sufficiently high speed.

DISCLOSURE OF THE INVENTION

To solve the above-mentioned problem of the prior art, the graphic form extracting system of the present invention is adapted so that, in the process of generating straight lines for filling the plane of a graphic form contained in a view volume corresponding to a preset window and comparing the depth value of the straight lines with a preset one, the straight lines are each produced every N straight lines which would be needed to completely fill the plane of the graphic form, and picture elements, for the respective straight lines to be generated are each produced every M picture elements which would be needed to completely fill each straight line.

According to the system of the present invention, the number of straight lines generated for the comparison of the depth values is selected to be 1/N, and the number of picture elements for each straight line is selected to be 1/M. This reduces the time for the generation of the straight lines and for the comparison of the depth values, and accordingly increases the speed of the graphic extraction.

BRIEF DESCRIPTION OF THE DRAWINGS

Figs. 1A and 1B are a diagram for explaining an embodiment of the present invention;

Fig. 2 is a diagram for explaining a graphic form filling process;

Fig 3 is a diagram for explaining the generation of straight lines;

Figs. 4A and 4B are a diagram showing the extraction of picture elements in the cases of graphic display and graphic extraction; and

Fig. 5 is a diagram illustrating the consititution of a three-dimensional graphic processor.

BEST MODE FOR CARRYING OUT THE INVENTION

The graphic form extracting system of the present invention is intended to reduce the time for the graphic form extraction by lowering resolution in the graphic form filling and straight line generating processes.

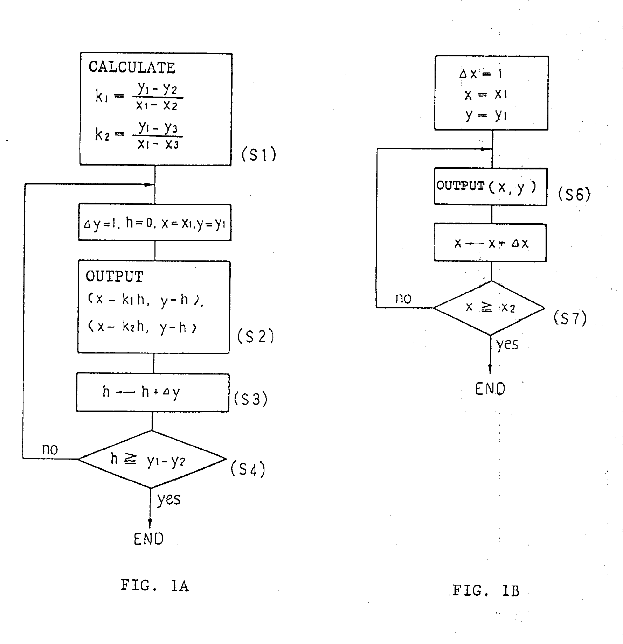

Figs. 1A and 1B illustrate an embodiment of the system of the present invention, Fig. 1A being a flowchart showing the graphic form filling process and Fig. 1B a flowchart showing the generation of straight lines.

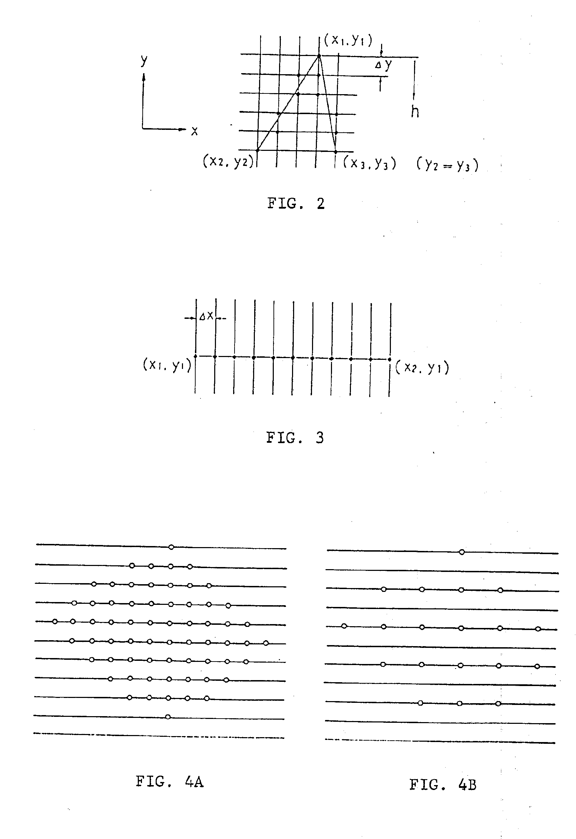

The graphic form filling process is performed by dividing a graphic form into unit triangles and generating a number of segments parallel to the base of each triangle in a manner to extend across the triangle over the entire area thereof. Now let it be considered that, for a triangle with the vertex $(x_1, y_1)$ and the base $(x_2, y_2)(x_3, y_3)$ shown in Fig. 2, a number of segments are generated which extend parallel to the base
and across the triangle all over it as shown.

At first, the inclinations $k_1$ and $k_2$ of two sides
containing the vertex $(x_1, y_1)$ of the triangle are obtained
based on the following relations (step S1).

$$k_1 = \frac{y_1 - y_2}{x_1 - x_2}$$

$$k_2 = \frac{y_1 - y_3}{x_1 - x_3}$$

Next, a straight line which is generated next to the
vertex is obtained by the following calculation with $\Delta y = 1$,
$h = 0$, $x = x_1$, and $y = y_1$ (step 2).

$$(x - k_1 h, \; y - h), \; (x - k_2 h, \; y - h)$$

where h indicates the height from the vertex $(x_1, y_1)$ to the
straight line.

By setting $h \leftarrow h + \Delta y$ when the first straight line is
generated, the next straight line is obtained (step S3). Here,
$\Delta y$ is the spacing of the straight lines in the y direction.

Thereafter such processing is repeated until the distance
h from the vertex exceeds the difference between the y coordinates
of the vertex and the base, $(y_1 - y_2)$ (step S4).

According to the above system, by setting the spacing
$\Delta y$ to 2, for instance, the time for the graphic form filling
process can be reduced about 1/2 that needed in the case of
Fig. 5.

The generation of straight lines is carried out by writing picture elements corresponding to each straight line produced in the graphic form filling process. Now let it be assumed that picture elements are written at regular intervals of $\Delta x$, beginning at the starting point $(x_1, y_1)$ of a segment, as shown in Fig. 3.

In Fig. 1B, $\Delta x = 1$, $x = x_1$, and $y = y_1$ are set and a point $(x, y)$ is output (step S6), after which the same processing is repeated with $x \leftarrow x + \Delta x$. When the value on the x axis exceeds $x_2$, the processing is completed (step S7). The distance $\Delta x$ is determined corresponding to the spacing of the picture elements. With $\Delta x - 2$, the time for the generation of straight lines can be reduced around 1/2 that in the case of Fig. 5.

Figs. 4A and 4B show picture elements which are extracted for displaying and extracting a graphic form, respectively. It will be seen that the number of picture elements to be extracted for the extraction of a graphic form, shown in Fig. 4B, is far smaller than the number of picture elements extracted for displaying the graphic form, shown in Fig. 4A.

As described above, according to the system of the present invention, in the display rewrite operation which involves, for the extraction of a graphic form, the generation of straight lines which fill the plane of the graphic form and the comparison of their depth values, the straight lines for filling the plane of the graphic form are thinned out by generating each of the straight lines every N scanning lines of the display screen and picture elements for forming the straight line are thinned out so that the number of picture elements is $1/M$; accordingly, resolution of the coordinates is lowered to $1/M$. As a result of this, the total number of picture elements forming the straight lines for comparing their depth values in the extraction of the graphic form is $1/N \times M$. This substantially reduces the time for generating the straight lines and comparing their depth values, and hence increases the speed of the graphic form extracting operation.

As described above, according to the system of the present invention, the number of straight lines to be generated for filling a polygon is $1/N$ and resolution of the coordinates in the straight line generating process is $1/M$ in the display rewrite operation which takes place when a graphic form is extracted. Accordingly, the time for the graphic form extracting process is markedly reduced.

C L A I M

A graphic form extracting system for a three-dimensional graphic processor in which a window is set about a specified point on a display screen, three-dimensional graphic data is clipped corresponding to the window, a gaphic form contained in a view volume corresponding to the window and data for identifying the graphic form are extracted, the identification data is stored in a pick buffer, the depth value of each straight line generated corresponding to the plane of the extracted graphic form is compared with a preset depth value, and when coincidence is detected therebetween, graphic data corresponding to the identification data of a graphic form to which the straight line belongs is read out, whereby extracting a graphic form corresponding to the specified point, characterized in:

that in a graphic form filling process, the straight lines which are generated for comparing the depth values are each generated every N (N being an arbitrary integer) straight lines which fill the plane of the graphic form; and

that in the straight line generating process, picture elements for each of the straight lines for comparing their depth values are each generated every M (M being an arbitray integer) picture elements which fill each straight line.

CALCULATE

$$k_1 = \frac{y_1 - y_2}{x_1 - x_2}$$

$$k_2 = \frac{y_1 - y_3}{x_1 - x_3}$$

(S1)

$\Delta y = 1, \ h = 0, \ x = x_1, y = y_1$

OUTPUT

$(x - k_1 h, \ y - h)$,

$(x - k_2 h, \ y - h)$

(S2)

$h \longleftarrow h + \Delta y$    (S3)

$h \geqq \ y_1 - y_2$    (S4)    no

yes

END

FIG. 1A

$\Delta x = 1$

$x = x_1$

$y = y_1$

OUTPUT $(x, y)$    (S6)

$x \longleftarrow x + \Delta x$

$x \geqq x_2$    (S7)    no

yes

END

FIG. 1B

FIG. 2

FIG. 3

FIG. 4A                    FIG. 4B

FIG. 5

# INTERNATIONAL SEARCH REPORT

0255545

International Application No. PCT/JP87/00029

## I. CLASSIFICATION OF SUBJECT MATTER (if several classification symbols apply, indicate all) [3]

According to International Patent Classification (IPC) or to both National Classification and IPC

Int.Cl$^4$   G06F 15/72

## II. FIELDS SEARCHED

| Minimum Documentation Searched [4] | |
|---|---|
| Classification System | Classification Symbols |
| IPC | G06F15/72 |

| Documentation Searched other than Minimum Documentation to the Extent that such Documents are Included in the Fields Searched [5] |
|---|
| Jitsuyo Shinan Koho          1972 – 1986 <br> Kokai Jitsuyo Shinan Koho   1972 – 1986 |

## III. DOCUMENTS CONSIDERED TO BE RELEVANT [14]

| Category* | Citation of Document, [16] with indication, where appropriate, of the relevant passages [17] | Relevant to Claim No. [18] |
|---|---|---|
| Y | JP, A, 59-129897 (Lexidata Corporation) 26 July 1984 (26. 07. 84) & US, A, 4,475,104 & EP, A, 116737 | 1 |
| Y | JP, A, 56-142585 (Fuji Electric Co., Ltd.) 6 November 1981 (06. 11. 81) (Family: none) | 1 |

* Special categories of cited documents: [15]

"A"  document defining the general state of the art which is not considered to be of particular relevance

"E"  earlier document but published on or after the international filing date

"L"  document which may throw doubts on priority claim(s) or which is cited to establish the publication date of another citation or other special reason (as specified)

"O"  document referring to an oral disclosure, use, exhibition or other means

"P"  document published prior to the international filing date but later than the priority date claimed

"T"  later document published after the international filing date or priority date and not in conflict with the application but cited to understand the principle or theory underlying the invention

"X"  document of particular relevance; the claimed invention cannot be considered novel or cannot be considered to involve an inventive step

"Y"  document of particular relevance; the claimed invention cannot be considered to involve an inventive step when the document is combined with one or more other such documents, such combination being obvious to a person skilled in the art

"&"  document member of the same patent family

## IV. CERTIFICATION

| Date of the Actual Completion of the International Search [2] | Date of Mailing of this International Search Report [2] |
|---|---|
| March 3, 1987 (03. 03. 87) | March 16, 1987 (16. 03. 87) |
| International Searching Authority [1] | Signature of Authorized Officer [20] |
| Japanese Patent Office | |

Form PCT/ISA/210 (second sheet) (October 1981)